# EUROPEAN PATENT SPECIFICATION

(11) **EP 2 369 477 B1**
(45) Date of publication and mention of the grant of the patent: **11.10.2017**
(21) Application number: 10001784.7
(22) Date of filing: 22.02.2010
(51) Int. Cl.: G06F 9/48

(54) **Technique for providing task priority related information intended for task scheduling in a system**
Technik zur Bereitstellung der Aufgabenpriorität im Zusammenhang mit zur Aufgabenplanung in einem System vorgesehenen Informationen
Technique pour fournir des informations associées à la priorité des tâches pour planifier les tâches dans un système

(43) Date of publication of application: 28.09.2011
(73) Proprietor: Telefonaktiebolaget LM Ericsson (publ), 164 83 Stockholm (SE)
(72) Inventor: Nader, Ali, 214 25 Malmö (SE)
(74) Representative: Ericsson

(56) References cited:
- EP-A2- 2 012 233
- WO-A1-03/065214
- US-A1- 2008 196 031
- US-A1- 2008 295 104
- David Watts et al.: "Tuning IBM System x Servers for Performance", 4 August 2009 (2009-08-04), IBM Redbooks ISBN: 0-7384-3307-1

## Description

### Technical Field

The present invention generally relates to the technical field of providing task priority related information intended for task scheduling in a system. In particular, the invention relates to a technique for obtaining priority information relating to priorities of a plurality of tasks depending on at least one status relating to the system.

### Background

Electronic systems, like data processing systems, electronic devices, mobile communication terminals and the like, use task scheduling for controlling the order and resource access time of tasks to be executed within the system. Task scheduling is of particular relevance for the system in case tasks to be executed within the system are to concurrently use the same system resources, e.g., processor time, communication bandwidth, memory access and the like. In this case, the task scheduling decides which of the tasks competing for the same system resources are executed with a higher priority than other tasks, i.e., to which tasks a longer resource access time is allocated.

In known mobile communication systems, a static look-up table comprising a fixed priority for each task to be executed in the system is used for the task scheduling. For example, in case two tasks are to concurrently use the same system resources, the task to which the higher priority is allocated in the static look-up table is executed before the other task. Accordingly, the static look-up table is an input source for the task scheduling. For generating the static look-up table, priorities to be written in the static look-up table are once (e.g., as factory default setting) determined such that a stable performance of the system in all common system situations is provided. However, the known static look-up table provides no priority information for the task scheduling that is taking an actual status of the system into consideration.

Moreover, the fixed priority distribution included in the static look-up table is not well suited for all system situations. In some system scenarios, e.g., in case of system performance deterioration, it is desired to give a single task, i.e., a task that is in common system situations of low relevance, preferred access to system resources and postpone execution of other tasks. However, since the task priorities included in the static look-up table are fixed and information regarding a current status or situation of the system is not taken into consideration for providing the static look-up table and for the subsequent task scheduling, system performance deterioration or even system failure may occur.

Other known systems use task scheduling algorithms, e.g., Round-Robin, Fair Queue, Weighted Fair Queue, Priority Inversion, etc. for ordering the execution of tasks and the allocation of resource access time to tasks. Such task scheduling algorithms have the aim of improving the average task execution performance of the system, i.e., to load balance the system, avoid system starvation and/or achieve a target quality of service. For this, the known task scheduling algorithms assign each task a limited access time to the system resources.

However, such an optimization of the average task execution performance is not desired in all system situations. For example, in case of system failure, the aim is to keep the system operational and not to improve the average system performance. Thus, depending on the status of the system, it may be desired to execute certain tasks with a higher priority than other tasks. However, input data used in the known task scheduling algorithms is not generated based on system status information.

Document US 2009/0044060 A1 discloses a method for supervising task-based data processing in a real time operation system. Task identifiers stored in a log memory of the system provide a task history pattern of scheduled tasks. Based on the task history pattern, failures to appear in the system can be detected. However, only past task scheduling logs are considered for the failure prediction.

Document WO 03/065214 A1 discloses a method of setting priority levels in a multiprogramming computer system with priority scheduling. The system comprises a scheduler which is a part that chooses which of two or more threads of execution that are ready to run should be run next. To ensure that certain threads are more likely to be chosen than others, threads have a priority level assigned to them. In one embodiment, the priority of one or more threads of execution are lowered if their measured relative use exceeds a certain escalation threshold for the duration of an escalation time period.

US 2008/0295104 A1 discloses a real time processing software control method in which the priorities of plural states can be relatively described according to the necessities of real time processing for the respective states, and design of state transitions and task priorities considering real time property can be performed in the upstream design stage before specific execution times are clarified.

Document David Watts et al.: "Tuning IBM System x Servers for Performance", 4 August 2009, IBM Redbooks ISBN: 0-7384-3307-1 discloses a textbook regarding performance tuning guidelines for IBM system x servers. The textbook discloses a task manager allowing to change priorities of a process from six options.

Thus, for task scheduling in a system, the problem of obtaining suitable task priority information as input data for the task scheduling arises.

### Summary

Accordingly, there is a need for a technique of providing task priority related information intended for task scheduling in a system, which is avoiding at least some of the disadvantages outlined above.

Some or all of the above problems are overcome by a method for providing task priority related information intended for task scheduling in a system according to claim 1, a method for providing task priority related information intended for task scheduling in a system according to claim 2, an electronic device adapted to provide task priority related information intended for task scheduling in the electronic device according to claim 9, and an electronic device adapted to provide task priority related information intended for task scheduling in the electronic device according to claim 10.

This need is satisfied according to a first aspect by a method for providing task priority related information intended for task scheduling in a system comprising the steps of obtaining at least one status relating to the system, obtaining priority information relating to priorities of a plurality of tasks depending on the obtained status, and providing the obtained information for the task scheduling.

The system may be any kind of electronic entity that is capable of scheduling a plurality of tasks, e.g., a computer system, an electronic device, a mobile communication terminal, a mobile phone and the like. The system may be a mobile or fixed-line device. The system may also be a Layer 1 processing system. In particular, the system may be any kind of electronic entity that is capable of executing at least one task.

The task to be scheduled by the system may be any kind of service, process, thread, workflow or data flow that is adapted to be processed. In particular, the processing of the task may be electronically provided. Moreover, execution or processing of the task may cause a consumption of at least one of processing power, communication bandwidth and energy within the system.

The status relating to the system may concern any kind of situation, scenario or condition relating to the system. For example, in case the system is a mobile communication terminal, the status relating to the system may be at least of an idle mode of the system, a situation of bad data reception by the system, and a situation of an ongoing user data reception by the system from a communication network. In case the system is a dual Subscriber Identity Module (SIM) card mobile phone, a status change may be related to a detection of more than one SIM card within the mobile phone, a detection that at least one SIM card is inserted into the mobile phone, a switching to one SIM card, or a switching from a first SIM card to a second SIM card. The obtaining of the at least one status relating to the system may comprise any kind of measurement or data detection. In particular, the obtaining of the at least one status relating to the system may comprise a receiving of data relating to the system from within or from outside the system, e.g., from a mobile communication network.

By first obtaining at least one status relating to the system and thereafter obtaining priority information relating to priorities of a plurality of tasks depending on the obtained status, suitable priority information adapted to the status of the system may be obtained. In particular, the status relating to the system may be an actual, i.e., current, status of the system. The status relating to the system may also be a status of the system at a predetermined point or period of time. The obtaining of at least one status relating to the system may be provided in real time by the system. For this, the system may comprise a real time operating system.

The priority relations between the plurality of tasks may be derivable from the priority information and the priority information may be selected from a plurality of priority information items depending on the obtained status. The priority information items may be any kind of data structures or data values capable of including or reflecting priority information for at least one task. Thus, information regarding which task has a higher priority in relation to another task may be derived from the priority information. Moreover, different priority information items may be available for selection. In particular, one of these items may be selected depending on the obtained status relating to the system. Thus, priority related information may be selectively obtained depending on the obtained status. Accordingly, only status specific priority information may be obtained, thereby avoiding reception of irrelevant priority information.

In order to further adapt the priority information gathering to the status relating to the system, the obtaining of the priority information may comprise the step of selecting, from a plurality of associations between at least one task and at least one priority for the task, an association depending on the obtained status. The association between at least one task and at least one priority for the task may be any kind of direct or indirect relation, allocation or assignment between the at least one task and the at least one priority for the task. At least one priority associated with a task may also be related to at least one priority associated with at least one further task.

According to one aspect, the at least one of the plurality of associations comprises a task priority table. In particular, the task priority table may be adapted to comprise for each task a range of priorities. The range of priorities may comprise a sequential or non-sequential order of priority values. Thus, depending on the obtained status relating to the system, one of a plurality of available task priority tables may be selected. Accordingly, the method may comprise the further step of selecting at least one of a plurality of tasks to be executed in the system depending on the selected task priority table. Therefore, different task priorities can be provided, i.e., selected, depending on the status relating to the system. Moreover, in case a range of priorities is provided within the task priority table, a current priority of a task may be changed within the range of priorities depending on task execution. For example, the current priority of a task may be changed, e.g., increased or decreased, within the range of priorities depending on an execution of the task or an execution of another task competing for the same resources relating to the system. Moreover, a current priority indication of a task may be related to a current priority indication of at least one further task. For example, a dynamic changing of the current priority indication for a first task may aim to provide the same current priority indication as for a second task. The dynamic changing of the current priority indication for a first task may also aim to provide a higher or lower current priority indication than for at least one further task.

According to another aspect, the method may comprise the further step of obtaining an initial priority value for at least one of the plurality of tasks. The initial priority value may e.g. be provided upon a startup of the system or a status change relating to the system. The initial priority value may also be used as a starting, i.e., basic, priority value in case ranges of priorities are associated with the tasks within the priority information.

As to a further aspect, the method may comprise the step of determining whether at least two of a plurality of tasks are to concurrently use the same resources relating to the system. The resources relating to the system may be any kind of system resources that can be accessed by a task, e.g., processor time, communication bandwidth, memory and the like. In particular, the system resources may be resources that can only be accessed by one task at the same time, i.e., no simultaneous resource access is possible. The system resources may also be resources that can only be accessed by a limited, e.g., a predetermined, number of tasks at the same time. In case it has been determined that at least two tasks are to concurrently use the same resources relating to the system, one of the at least two tasks may be selected, e.g., selected for execution, depending on the obtained status.

In order to provide priority information that is more precisely adapted to the status of the system, the method may take more than one status relating to the system into consideration. Thus, the step of obtaining at least one status relating to the system may comprise the steps of obtaining information regarding at least two statuses relating to the system and determining from the information regarding the at least two statuses a condition for obtaining the priority information. In other words, at least two statuses or scenarios relating to the system may be taken into consideration or merged for the obtaining of the priority information. Based on the obtained information, it can be determined how the obtaining of the priority information is provided. For example, it may be determined that a certain task priority table is selected in case at least two obtained statuses relating to the system indicate a system failure scenario. Moreover, a subset of at least two statuses relating to the system may be considered for the obtaining of the priority information.

According to one aspect, a first task for the task scheduling may relate to a reading of broadcast system information on a first frequency and a second task may relate to cell search measurements on one or more second frequencies different from the first frequency. Such tasks may be scheduled in case the system is a mobile communication terminal transmitting in a cellular communication network.

According to another aspect, a computer program product is provided. The computer program product comprises program code portions for performing one or more of the steps or one or more of the method aspects described herein, when the computer program product is executed on one or more computing devices, in particular, one or more components of a microprocessor. The computer program product may be stored on a computer-readable recording medium such as a permanent or re-writable memory, a CD-Rom, or a DVD. The computer program product may also be provided for download via one of more computer networks, such as the Internet, a cellular telecommunication network or a wireless or wired Local Area Network (LAN).

As for a hardware aspect, an electronic device adapted to provide task priority related information intended for task scheduling in the device is provided. The device comprises a first obtaining unit adapted to obtain at least one status relating to the system and a second obtaining unit adapted to obtain priority information relating to priorities of a plurality of tasks depending on the obtained status, wherein the obtained priority information is provided for the task scheduling.

The electronic device may be any kind of wired or mobile communication device like a mobile station, a mobile telephone, a Personal Digital Assistant (PDA), a network card, a User Equipment (UE) or other mobile communication apparatus. The mobile communication apparatus may be any apparatus that is capable of communicating via an air interface with a network node, e.g., a NodeB or a base station being deployed in a mobile communication network working according to a Third Generation Partnership Project (3GPP) standard. The electronic device may also be adapted to provide Layer 1 processing.

Further to the first and the second obtaining unit, the electronic device may comprise a task scheduling unit for scheduling tasks.

The second obtaining unit may be adapted to derive priority relations between the plurality of tasks from the priority information and to select the priority information from a plurality of priority information items depending on the obtained status.

The second obtaining unit may further be adapted to select, from a plurality of associations between at least one task and at least one priority for the task, an association depending on the obtained status.

At least one of the plurality of associations may be a task priority table that is adapted to comprise for each task a range of priorities.

The second obtaining unit may also be adapted to obtain an initial priority value for at least one of the plurality of tasks.

Moreover, the second obtaining unit may be adapted to obtain information regarding at least two statuses relating to the device, and to determine from the information regarding the at least two statuses a condition for obtaining the priority information.

In the following, the invention will be described with reference to exemplary embodiments illustrated in the drawings, wherein
- Fig. 1: is a schematic block diagram showing an implementation of a mobile communication terminal;
- Fig. 2: is a flow chart showing an embodiment of a method for providing task priority related information intended for task scheduling in a system;
- Fig. 3: is a schematic block diagram showing an implementation of a cellular communication network; and
- Fig. 4: is a schematic block diagram showing an implementation of a task priority table.

### Detailed description

In the following, for purposes of explanation and not limitation, specific details are set forth, such as particular sequences of steps, components and configurations, in order to provide a thorough understanding of the present invention. It will be apparent to one skilled in the art that the present invention may be practiced in other embodiments that depart from these specific details. For example, while the embodiments will be described with reference to mobile stations and mobile communication networks that are working according to the 3GPP Wideband Code Division Multiple Access (WCDMA) standard, it will be apparent to the skilled person that the invention can also be practiced in context with mobile stations and mobile communication networks which are working in accordance with other mobile communication standards. Moreover, the invention can also be practiced with non-mobile electronic devices and devices that are not primarily designed for voice or data communication. Furthermore, while certain embodiments will be described with reference to task priority tables, it will be apparent to the skilled person that the invention can also be practiced in context with any kind of associations between tasks and priorities. While the embodiments will be described with reference to system resources that can only be accessed by one task at the same time, the system resources may also be resources that can only be accessed by a limited number of tasks at the same time.

Moreover, those skilled in the art will appreciate that the functions and processes explained herein below may be implemented using software functioning in conjunction with programmed microprocessors or general-purpose computers. It will also be appreciated that while the embodiments are primarily described in the form of methods and apparatuses, the invention may also be embodied in a computer program product as well as in a system comprising a computer processor and a memory coupled to the processor, wherein the memory is encoded with one or more programs that may perform the functions disclosed herein.

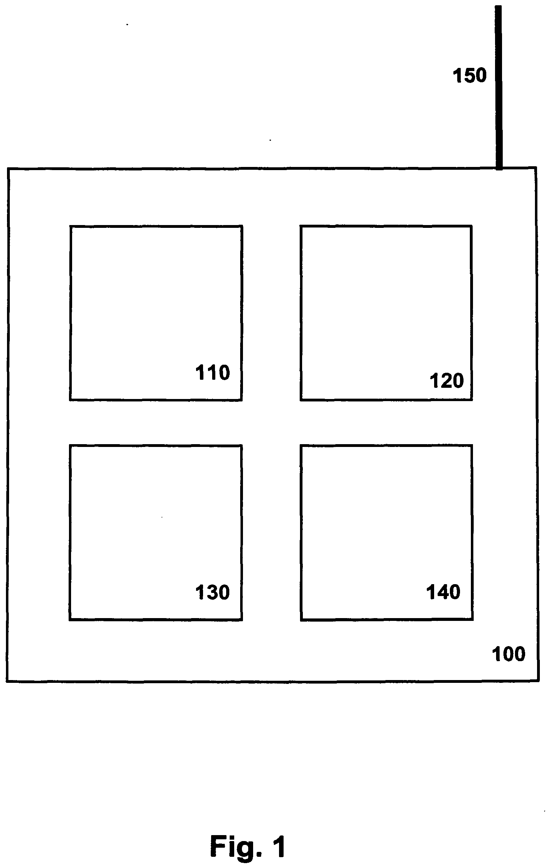

Fig. 1 shows a schematic block diagram illustrating an embodiment of a mobile communication terminal 100. Mobile communication terminal 100 comprises a first obtaining unit 110, a second obtaining unit 120, a task scheduling unit 130, and a memory unit 140. Via antenna 150, mobile communication terminal 100 communicates over an air interface within a 3GPP WCDMA cellular telecommunication network (not shown in Fig. 1). In particular, mobile communication terminal 100 is capable of providing Layer 1 processing.

First obtaining unit 110 is adapted to obtain at least one status relating to the mobile communication terminal 100 and second obtaining unit 120 is adapted to obtain priority information relating to priorities of a plurality of tasks depending on the status obtained by first obtaining unit 110. Furthermore, task scheduling unit 130 is adapted to receive the task priority related information from second obtaining unit 120 and provide task scheduling instructions for executing tasks. The tasks are executed within mobile communication terminal 100. For example, mobile communication terminal 100 may perform a cell search measurement task on one frequency. Memory unit 140 is adapted to store the priority information. Moreover, second obtaining unit 120 may obtain the priority information relating to priorities of a plurality of tasks from memory unit 140 depending on the status obtained by first obtaining unit 110. Although first obtaining unit 110, second obtaining unit 120, task scheduling unit 130, and memory unit 140 are shown in Fig. 1 as separate units, at least two or more of the units may be combined in one unit.

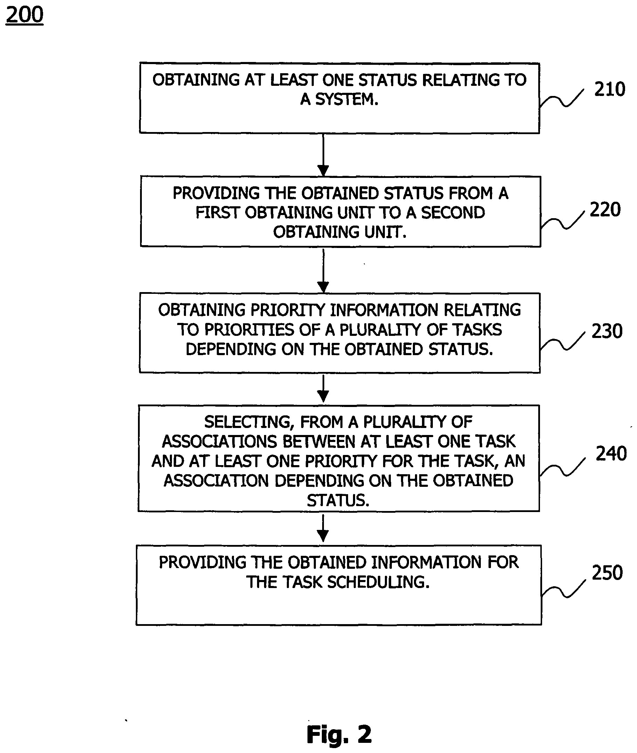

Fig. 2 is a flow chart illustrating an embodiment of a method 200 for providing task priority related information intended for task scheduling in the mobile communication terminal 100 of Fig. 1. The method 200 will be explained with reference to Figs. 1 and 2.

The method starts in step 210 by obtaining at least one status relating to a system, i.e., a status relating to mobile communication terminal 100. In particular, the obtained status may be an actual or current status relating to mobile communication terminal 100. The status may be obtained in real time. For example, first obtaining unit 110 determines at least one of that mobile communication terminal 100 is in idle mode, that reception within the mobile communication network via antenna 150 deteriorates, or that an ongoing user data reception via antenna 150 from the mobile communication network takes place. The obtaining of at least one status relating to the system may be provided based on measurements or data reception. For example, first obtaining unit 110 may constantly measure parameters relating to the transmission quality over the air interface of mobile communication terminal 100. Moreover, data relating to the system may be received via antenna 150 from the mobile communication network. First obtaining unit 110 may further process the obtained measurement results or data in order to obtain appropriate status data.

As a next step 220, the obtained at least one status relating to the system is provided by first obtaining unit 110 to second obtaining unit 120. Thereafter, in step 230, depending on the status relating to the system obtained by first obtaining unit 110, second obtaining unit 120 obtains priority information relating to priorities of a plurality of tasks. In particular, in step 240, second obtaining unit 120 selects from a plurality of associations between at least one task and at least one priority for the task or a plurality of priority information items an association or priority information item depending on the obtained status. For this, a plurality of associations between the at least one task and the at least one priority for the task or a plurality of priority information items are stored in memory unit 140. Thus, second obtaining unit 120 selects at least one of the plurality of associations or priority information items depending on the obtained status. The plurality of associations or priority information items may also be received via antenna 150 from the mobile communication network.

The plurality of associations stored in memory unit 140 may for example be task priority tables. Within the task priority tables, associations between tasks and priorities may be provided. Thus, depending on the obtained status of mobile communication terminal 100, a different task priority table is selected. For example, in case of good network reception via antenna 150, a first priority table is selected. However, in case of bad network reception via antenna 150, a second priority table is selected. Second priority table comprises task priorities that are adapted to the bad network reception situation so that tasks which are of high relevance during bad network reception for keeping the communication with the mobile communication network operational are executed more preferentially. Moreover, priority ranges for each task may be provided within the task priority tables. Within the priority ranges, current priorities allocated to the task may be dynamically changed based on task execution events.

In step 250 of method 200, the obtained priority information is provided from second obtaining unit 120 to task scheduling unit 130. Task scheduling unit 130 may further process the obtained priority information. Thereafter, depending on the priority information obtained from second obtaining unit 120, the tasks are executed by mobile communication terminal 100.

Thus, a current status, scenario or situation of mobile communication terminal 100 is taken into consideration for the obtaining of priority information and the subsequent scheduling of tasks to be executed in mobile communication terminal 100. Hence, a flexible scheme for obtaining priority information depending on current system situations is provided. Thus, the task scheduling is as well provided more flexible.

As to the obtaining of at least one status relating to the system, more than one status may be taken into consideration for the obtaining of priority information. Accordingly, first obtaining unit 110 may obtain at least two statuses relating to the system. For example, first obtaining unit 110 may obtain information regarding air interface reception quality and information regarding battery capacity of mobile communication terminal 100. In this case, a condition for obtaining the priority information by second obtaining unit 120 can be determined from the information regarding the at least two statuses. For example, the obtained two statuses relating to the mobile communication terminal 100 may be merged to one status item or a subset of situations may be considered for the obtaining of priority information. Thus, the task scheduling may be more precisely fine-grained to the current situation of mobile communication terminal 100, e.g., a system situation covering bad air interface reception and low battery capacity.

As a further embodiment, it is assumed that mobile communication terminal 100 is a dual SIM card mobile phone adapted to house at least two SIM cards. In this case, a status relating to the mobile communication terminal 100 may concern a determination that more than one SIM card is inserted in the terminal. The determination may be dynamic such that a status change is indicated once a first and/or a second SIM card is inserted in the mobile communication terminal 100. A status change may also be indicated in case it is switched from one SIM card to another SIM card, e.g., due to different tariffs in different areas. Moreover, different priorities may be assigned to the SIM cards depending on the detected status change. For example activities relating to a first SIM card may be assigned a higher priority than activities relating to a second SIM card. Thus, in case a resource conflict between a first task relating to the first SIM card and second task relating to the the second SIM card occurs, access to the resource is assigned to the task relating to the SIM card with the higher priority.

According to a modification of the embodiment regarding the dual SIM card mobile phone, two task priority tables are activated in case a status change relating to the mobile phone has been detected. In particular, the two task priority tables are relating to each other such that at least one priority associated with a first task is related to at least one priority associated with at least one further task. For example, in case it has been detected that a second SIM card has been inserted in the mobile phone, further to a first task priority table, a second task priority table is activated, whereas the first task priority table is relating to the second task priority table. Moreover, current priority indications of the first task priority table may be changed such that they match or a higher than current priority indications of the second task priority table.

According to another modification of the embodiment regarding the dual SIM card mobile phone, a first task priority table is used for task scheduling within the mobile phone. Once a second SIM card is inserted into the mobile phone, a second task priority table is used instead of the first task priority table for the task scheduling within the mobile phone.

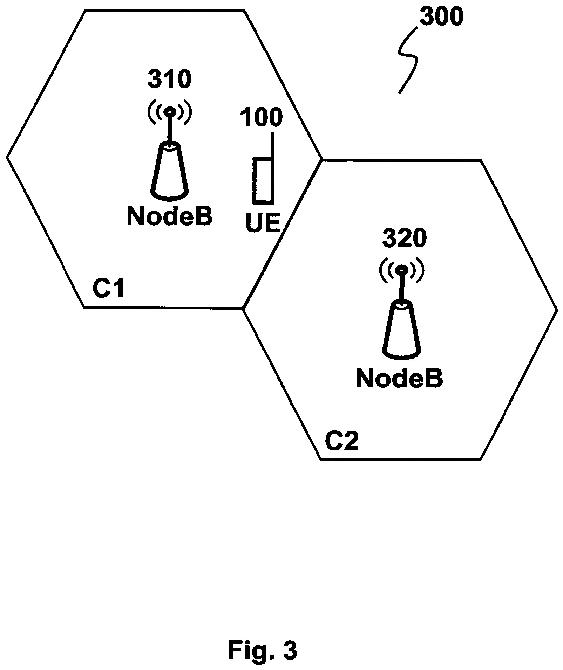

Fig. 3 shows a schematic block diagram illustrating an embodiment of a cellular communication network 300. Cellular communication network 300 is a 3GPP WCDMA network. In Fig. 3, a first network cell C1 being served by NodeB 310 and a second network cell C2 being served by NodeB 320 are exemplarily depicted. In a more advanced implementation (not shown), network 300 comprises a plurality of network cells and NodeBs.

User Equipment (UE) 100 is located within cell C1 and served by NodeB 310. UE 100 may be the mobile communication terminal 100 shown in Fig. 1. Moreover, UE 100 may execute the method shown in Fig. 2.

For simplified explanation purposes, it is assumed that UE 100 is only communicating on one frequency at the same time. Thus, UE 100 cannot at the same time receive data on one frequency and perform measurements on another frequency. It is further assumed that UE 100 is in idle mode camping on cell C1. Moreover, it is assumed that UE 100 is locally moving within cell C1.

During idle mode, UE 100 is receiving system information on a first frequency via Broadcast Channel (BCH) from NodeB 310. In particular, cell and system information is broadcasted via BCH. During normal operation of UE 100 in idle mode, the task of receiving and reading BCH has a high priority, since UE 100 has to receive cell and system information broadcasted by NodeB 310 on the first frequency in order to be reachable, e.g., for voice calls. However, in case the transmission quality over the air interface between UE 100 and NodeB 310 deteriorates (e.g., due to shadowing effects in densely populated areas), UE 100 may not receive all essential BCH blocks broadcasted by NodeB 310.

Since the task of reading BCH has a high priority in comparison to other tasks to be executed within UE 100 in idle mode and due to the deteriorated transmission quality, the task of reading BCH on the first frequency occupies all data communication system resources of UE 100. Thus, the radio access interface of UE 100 is occupied by the task of BCH reception. Hence, no cell search measurements on a second frequency, i.e., a frequency that is different from the first frequency, are provided. In particular, due to the lower priority of the cell search measurement task than the BCH reading task within UE 100, no cell search measurements on the frequency used in cell C2 by NodeB 320 are provided.

Thus, in case the transmission quality between UE 100 and NodeB 310 further deteriorates, UE 100 may lose connection with NodeB 310. However, since cell search measurements on other frequencies have been neglected, UE 100 is not aware of other cells to camp on. Thus, UE 100 is not aware that it could camp on cell C2. Accordingly, after losing connection with NodeB 310, UE 100 has to initiate cell search measurements in order to find a new cell to camp on. However, during this search, UE 100 may not be reachable, e.g., for a voice call.

To avoid this problem, UE 100 continuously determines its status. In the present embodiment, UE 100 continuously determines the transmission quality over the air interface between UE 100 and NodeB 310. Based on the determined status, i.e., transmission quality, UE 100 allocates different priorities to the task of reading BCH on the first frequency and the task of cell search measurements on the second frequency. In particular, if a good transmission quality is determined, the BCH reading task on the first frequency has a higher priority than the cell search measurement task on the second frequency. However, if a bad transmission quality is determined, the BCH reading task on the first frequency has a lower priority than the cell search measurement task on the second frequency. Thus, the obtaining of priority data depends on the status of UE 100.

According to a further embodiment, a plurality of task priority tables for different system statuses of UE 100 are stored within UE 100, e.g., in memory unit 140 shown in Fig. 1. In case UE 100 determines a deterioration of the transmission quality with NodeB 310, a specific task priority table relating to this situation is selected and used for the task scheduling. In particular, the task priorities included in the selected task priority table are adapted to the determined system scenario of transmission quality deterioration with NodeB 310. In the selected task priority table, the task of providing cell search measurements on the frequency used in cell C2 has a higher priority than in a task priority table being adapted to a good transmission quality scenario. Therefore, cell search measurements on the frequency used in cell C2 are continuously provided so that in idle mode, UE 100 can switch from serving cell C1 to serving cell C2 in case the transmission quality between UE 100 and NodeB 310 deteriorates or the connection between UE 100 and NodeB 310 is interrupted.

It should be noted that the embodiment according to Fig. 3 explains a simplified telecommunication scenario of an UE 100 communicating in a 3GPP WCDMA cellular communication network 300. In an actual implementation, more than two tasks may compete for the same system resources. Moreover, a plurality of services may be executed in parallel within UE 100. Furthermore, UE 100 may be capable of communicating in a single platform via a plurality of radio access technologies with NodeBs 310 and 320, e.g., WCDMA, Global System for Mobile Communications (GSM), and Long Term Evolution (LTE). Thus, UE 100 may be adapted to take a plurality of system statuses for obtaining appropriate priority information into consideration.

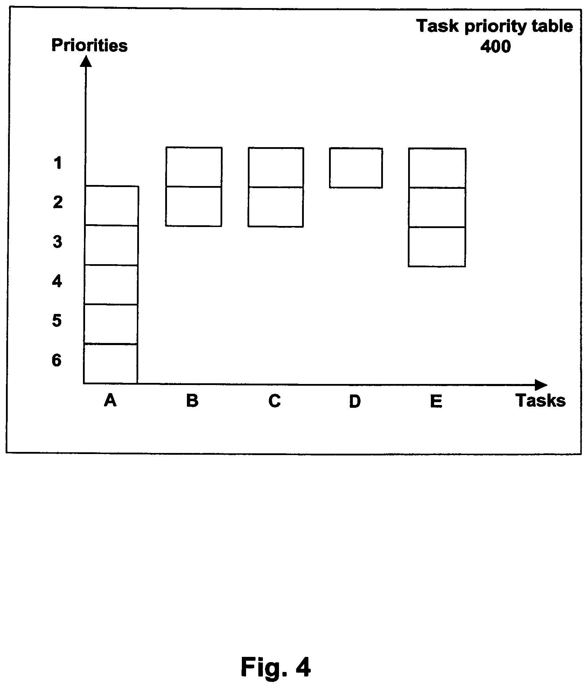

In the following, an embodiment of a task priority table 400 is explained with reference to Fig. 4. Task priority table 400 may be a task priority table used by UE 100 shown in Figs. 1 and 3. Task priority table 400 may also be a task priority table stored in memory unit 140 shown in Fig. 1. Moreover, a plurality of task priority tables having the same structure as task priority table 400 may be stored in memory unit 140.

Task priority table 400 comprises associations between tasks A to E and a plurality of priority values. In particular, for each of tasks A to E, ranges of priorities are provided. In task priority table 400, priority values from 2 to 6 are allocated to task A, priority values 1 and 2 are allocated to tasks B and C, priority value 1 is allocated to task D, and priority values from 1 to 3 are allocated to task E.

Moreover, in task priority table 400, the higher the priority value, the lower is the priority of the task. Thus, a lowest and a highest possible priority value within the range of priorities is allocated to each task. For example, task A has lowest possible priority value of 6 and a highest possible priority value of 2. Moreover, an initial priority value may be provided for each task. The initial priority value may be the lowest possible priority value within the range of priorities or a certain priority value may be allocated to each task as the initial priority value, e.g., an initial priority value of 4 for task A.

Furthermore, a current priority value within the ranges of priorities may be allocated for each task. The current priority value may be dynamically changed within the range of priorities. Further, the current priority value may be stored as an indication, e.g., a pointer, within the system or a copy of task priority table 400 may be provided in order to follow/log the changing of current priority values. The dynamic current priority value changing may take place depending on an execution of a task. For example, a current priority value of 4 may be allocated to task A, whereas the allocated value may be changed to 3 depending on an execution of a task. Moreover, depending on the current priority values, the task scheduling may be provided. For example, assuming that the current priority value of task A is 3, the current priority values of tasks B and C are 2, the current priority value of task D is 1, and the current priority value of task E is 3, task D has the highest priority and is executed with the highest priority within the system. If several tasks have the same current priorities, further conditions for selecting one task may be taken into consideration, e.g., waiting times for being executed or highest possible priority within the range of priorities. Moreover, a random task selection may be provided in the latter case. The dynamic changing of the current priority indication for task A may also be performed such that the same current priority indication as for task E is provided. For this, task A may monitor the current priority value allocated to task E. As a further example, the dynamic changing of the current priority indication for task A may also aim to provide a higher or lower current priority indication than for tasks C and E.

Thus, a flexible obtaining of task priority related information intended for task scheduling in a system depending on the status of the system is provided.

It is believed that many advantages of the present invention will be fully understood from the foregoing description, and it will be apparent that various changes may be made in the form, construction and arrangement of the exemplary aspects thereof without departing from the scope of the invention or without sacrificing all of its advantages. Because the invention can be varied in many ways, it will be recognized that the invention should be limited only by the scope of the following claims.

## Claims

1. A method for providing task priority related information intended for task scheduling in a system (100), the system (100) being a mobile communication terminal having an antenna (150), the method comprising
- obtaining (210) a status relating to the system (100), the status relating to the system (100) being a situation of good or bad network reception by the mobile communication terminal,
- selecting (240) from a plurality of task priority tables (400) a certain task priority table, wherein in case of good network reception via the antenna (150), a first priority table is selected, in case of bad network reception via the antenna (150), a second priority table is selected, the second priority table comprises task priorities that are adapted to the bad network reception situation so that tasks which are of high relevance during bad network reception for keeping the communication with the communication network operational are executed more preferentially, and the task priority tables (400) are adapted to comprise for each task a range of priorities which comprises a sequential or non-sequential order of priority values; and
- providing (230) the selected task priority table for the task scheduling.

2. A method for providing task priority related information intended for task scheduling in a system (100), the system (100) being a dual Subscriber Identity Module, SIM, card mobile phone (100), the method comprising
- obtaining (210) a status relating to the system (100), wherein status changes related to the system (100) are related to a detection of more than one SIM card within the dual SIM card mobile phone,
- selecting (240) from a plurality of task priority tables (400) a first task priority table, wherein in case it has been detected that a second SIM card has been inserted in the mobile phone (100), a second task priority table is selected instead of the first task priority table, and the task priority tables (400) are adapted to comprise for each task a range of priorities which comprises a sequential or non-sequential order of priority values, wherein the second task priority table enables that in case a resource conflict between a first task relating to the first SIM card and second task relating to the second SIM card occurs, access to the resource is assigned to the task relating to the SIM card with a higher priority value; and
- providing (230) the selected task priority table for the task scheduling.

3. The method of claim 1 or 2 further comprising
- obtaining an initial priority value for at least one of the plurality of tasks.

4. The method of any of the preceding claims, wherein the system (100) is a Layer 1 processing system.

5. The method of any of the preceding claims, wherein a first task relates to a reading of broadcast system information on a first frequency and a second task relates to cell search measurements on one or more second frequencies different from the first frequency.

6. A computer program product including program code portions for performing the method steps according to one of the preceding claims, when the computer program product is executed on one or more components of a computing device.

7. The computer program product according to claim 6, stored on a computer-readable recording medium.

8. An electronic device (100) adapted to provide task priority related information intended for task scheduling in the electronic device (100), the electronic device (100) being a mobile communication terminal comprising
- an antenna (150),
- a first obtaining unit (110) adapted to obtain a status relating to the electronic device (100), the status relating to the electronic device (100) being a situation of good or bad network reception by the mobile communication terminal,
- a second obtaining unit (120) adapted to select (240) from a plurality of task priority tables (400) a certain task priority table, wherein
- in case of good network reception via the antenna (150), a first priority table is selected,
- in case of bad network reception via the antenna (150), a second priority table is selected, the second priority table comprises task priorities that are adapted to the bad network reception situation so that tasks which are of high relevance during bad network reception for keeping the communication with the communication network operational are executed more preferentially,
- the task priority tables (400) are adapted to comprise for each task a range of priorities which comprises a sequential or non-sequential order of priority values, and
- the selected task priority table is provided for the task scheduling.

9. An electronic device (100) adapted to provide task priority related information intended for task scheduling in the electronic device (100), the electronic device (100) being a dual Subscriber Identity Module, SIM, card mobile phone (100) comprising
- a first obtaining unit (110) adapted to obtain a status relating to the electronic device (100), wherein status changes relating to the electronic device (100) are related to a detection of more than one SIM card within the dual SIM card mobile phone,
- a second obtaining unit (120) adapted to select (240) from a plurality of task priority tables (400) a first task priority table, wherein
- in case it has been detected that a second SIM card has been inserted in the mobile phone (100), a second task priority table is selected instead of the first task priority table,
- the task priority tables (400) are adapted to comprise for each task a range of priorities which comprises a sequential or non-sequential order of priority values,
- the second task priority table is adapted to enable that in case a resource conflict between a first task relating to the first SIM card and second task relating to the second SIM card occurs, access to the resource is assigned to the task relating to the SIM card with a higher priority value, and
- the selected task priority table is provided for the task scheduling.

10. The electronic device (100) of claim 8 or 9, wherein the second obtaining unit (120) is adapted to obtain an initial priority value for at least one of the plurality of tasks.

11. The electronic device (100) of any of claims 8 to 10, wherein the electronic device (100) is adapted to provide Layer 1 processing.

12. The electronic device (100) of any of claims 8 to 11, wherein a first task relates to a reading of broadcast system information on a first frequency and a second task relates to cell search measurements on one or more second frequencies different from the first frequency.

## Patentansprüche

1. Verfahren zur Bereitstellung von aufgabenprioritätsbezogenen Informationen, die zur Aufgabenplanung in einem System (100) bestimmt sind, wobei das System (100) ein mobiles Kommunikationsendgerät mit einer Antenne (150) ist, und das Verfahren umfasst:
- Abrufen (210) eines Status in Bezug auf das System (100), wobei der Status in Bezug auf das System (100) eine Situation guten oder schlechten Netzwerkempfangs durch das mobile Kommunikationsendgerät ist,
- Auswählen (240) einer bestimmten Aufgabeprioritätstabelle aus einer Mehrzahl von Aufgabenprioritätstabellen (400), wobei im Falle guten Netzwerkempfangs über die Antenne (150) eine erste Prioritätstabelle ausgewählt wird, im Falle schlechten Netzwerkempfangs über die Antenne (150) eine zweite Prioritätstabelle ausgewählt wird, wobei die zweite Prioritätstabelle Aufgabenprioritäten umfasst, die an die Situation schlechten Netzwerkempfangs angepasst sind, so dass Aufgaben, die zum In-Gang-halten der Kommunikation mit dem Kommunikationsnetzwerk bei schlechtem Netzwerkempfang von hoher Relevanz sind, vorrangig ausgeführt werden, und die Aufgabeprioritätstabellen (400) so ausgelegt sind, dass sie für jede Aufgabe einen Bereich von Prioritäten umfassen, der eine sequenzielle oder nicht-sequenzielle Reihenfolge von Prioritätswerten umfasst; und
- Bereitstellen (230) der ausgewählten Aufgabenprioritätstabelle zur Aufgabenplanung.

2. Verfahren zur Bereitstellung von aufgabenprioritätsbezogenen Informationen, die zur Aufgabenplanung in einem System (100) bestimmt sind, wobei das System ein Mobiltelefon (100) mit zwei Teilnehmerkennungsmodul, SIM,-Karten ist, und das Verfahren umfasst:
- Abrufen (210) eines Status in Bezug auf das System (100), wobei Statusänderungen in Bezug auf das System (100) eine Erkennung mehr als einer SIM-Karte innerhalb des Mobiltelefons mit zwei SIM-Karten betreffen,
- Auswählen (240) einer ersten Aufgabenprioritätstabelle aus einer Mehrzahl von Aufgabenprioritätstabellen (400), wobei, falls erkannt wurde, dass eine zweite SIM-Karte in das Mobiltelefon (100) eingeführt wurde, eine zweite Aufgabenprioritätstabelle anstelle der ersten Prioritätstabelle ausgewählt wird, und die Aufgabeprioritätstabellen (400) so ausgelegt sind, dass sie für jede Aufgabe einen Bereich von Prioritäten umfassen, der eine sequenzielle oder nicht-sequenzielle Reihenfolge von Prioritätswerten umfasst, wobei die zweite Aufgabeprioritätstabelle ermöglicht, dass, falls ein Ressourcenkonflikt zwischen einer ersten Aufgabe in Bezug auf die erste SIM-Karte und eine zweite Aufgabe in Bezug auf die zweite SIM-Karte entsteht, der Aufgabe in Bezug auf die SIM-Karte mit einem höheren Prioritätswert Zugriff auf die Ressource zugeteilt wird; und
- Bereitstellen (230) der ausgewählten Aufgabenprioritätstabelle zur Aufgabenplanung.

3. Verfahren nach Anspruch 1 oder 2, ferner umfassend:
- Abrufen eines anfänglichen Prioritätswerts für mindestens eine der Mehrzahl von Aufgaben.

4. Verfahren nach einem der vorhergehenden Ansprüche, wobei das System (100) Schicht-1-Verarbeitungssystem ist.

5. Verfahren nach einem der vorhergehenden Ansprüche, wobei eine erste Aufgabe ein Auslesen von Broadcast-Systeminformationen auf einer ersten Frequenz betrifft, und eine zweite Aufgabe Zellsuchmessungen auf einer oder mehreren von der ersten Frequenz verschiedenen zweiten Frequenzen betrifft.

6. Computerprogrammprodukt, umfassend Programmcodeabschnitte zum Ausführen der Verfahrensschritte nach einem der vorhergehenden Ansprüche, wenn das Computerprogrammprodukt auf einer oder mehreren Komponenten einer Datenverarbeitungsvorrichtung ausgeführt wird.

7. Computerprogrammprodukt nach Anspruch 6, gespeichert auf einem computerlesbaren Aufzeichnungsmedium.

8. Elektronische Vorrichtung (100), die so ausgelegt ist, dass sie aufgabenprioritätsbezogene Informationen bereitstellt, die zur Aufgabeplanung in der elektronischen Vorrichtung (100) bestimmt sind, wobei die elektronische Vorrichtung (100) ein mobiles Kommunikationsendgerät ist und umfasst:
- eine Antenne (150);
- eine erste Abrufeinheit (110), die so ausgelegt ist, dass sie einen Status in Bezug auf die elektronische Vorrichtung (100) abruft, wobei der Status in Bezug auf die elektronische Vorrichtung (100) eine Situation guten oder schlechten Netzwerkempfangs durch das mobile Kommunikationsendgerät ist,
- eine zweite Abrufeinheit (120) die so ausgelegt ist, dass sie eine bestimmte Aufgabenprioritätstabelle aus einer Mehrzahl von Aufgabenprioritätstabellen (400) auswählt (240), wobei
- im Falle guten Netzwerkempfangs über die Antenne (150) eine erste Prioritätstabelle ausgewählt wird,
- im Falle schlechten Netzwerkempfangs über die Antenne (150) eine zweite Prioritätstabelle ausgewählt wird, wobei die zweite Prioritätstabelle Aufgabenprioritäten umfasst, die an die Situation schlechten Netzwerkempfangs angepasst sind, so dass Aufgaben, die zum In-Gang-halten der Kommunikation mit dem Kommunikationsnetzwerk bei schlechtem Netzwerkempfang von hoher Relevanz sind, vorrangig ausgeführt werden,
- die Aufgabeprioritätstabellen (400) so ausgelegt sind, dass sie für jede Aufgabe einen Bereich von Prioritäten umfassen, der eine sequenzielle oder nicht-sequenzielle Reihenfolge von Prioritätswerten umfasst, und
- die ausgewählte Aufgabenprioritätstabelle zur Aufgabenplanung bereitgestellt wird.

9. Elektronische Vorrichtung (100), die so ausgelegt ist, dass sie aufgabenprioritätsbezogene Informationen bereitstellt, die zur Aufgabeplanung in der elektronischen Vorrichtung (100) bestimmt sind, wobei die elektronische Vorrichtung (100) ein Mobiltelefon mit zwei Teilnehmerkennungsmodul, SIM,-Karten ist und umfasst:
- eine erste Abrufeinheit (110), die so ausgelegt ist, dass sie einen Status in Bezug auf die elektronische Vorrichtung (100) abruft, wobei Statusänderungen in Bezug auf die elektronische Vorrichtung (100) eine Erkennung mehr als einer SIM-Karte innerhalb des Mobiltelefons mit zwei SIM-Karten betreffen,
- eine zweite Abrufeinheit (120) die so ausgelegt ist, dass sie eine erste Aufgabenprioritätstabelle aus einer Mehrzahl von Aufgabenprioritätstabellen (400) auswählt (240), wobei,
- falls erkannt wurde, dass eine zweite SIM-Karte in das Mobiltelefon (100) eingeführt wird, eine zweite Aufgabenprioritätstabelle anstelle der ersten Aufgabenprioritätstabelle ausgewählt wird,
- die Aufgabeprioritätstabellen (400) so ausgelegt sind, dass sie für jede Aufgabe einen Bereich von Prioritäten umfassen, der eine sequenzielle oder nicht-sequenzielle Reihenfolge von Prioritätswerten umfasst,
- wobei die zweite Aufgabeprioritätstabelle so ausgelegt ist, dass sie ermöglicht, dass, falls ein Ressourcenkonflikt zwischen einer ersten Aufgabe in Bezug auf die erste SIM-Karte und eine zweite Aufgabe in Bezug auf die zweite SIM-Karte entsteht, der Aufgabe in Bezug auf die SIM-Karte mit einem höheren Prioritätswert Zugriff auf die Ressource zugeteilt wird, und
- die ausgewählte Aufgabenprioritätstabelle zur Aufgabenplanung bereitgestellt wird.

10. Elektronische Vorrichtung (100) nach Anspruch 8 oder 9, wobei die zweite Abrufeinheit (120) so ausgelegt ist, dass sie einen anfänglichen Prioritätswert für mindestens eine der Mehrzahl von Aufgaben abruft.

11. Elektronische Vorrichtung (100) nach einem der Ansprüche 8 bis 10, wobei die elektronische Vorrichtung (100) so ausgelegt ist, dass sie Schicht-1-Verarbeitung bereitstellt.

12. Elektronische Vorrichtung nach einem der Ansprüche 8 bis 11, wobei eine erste Aufgabe ein Auslesen von Broadcast-Systeminformationen auf einer ersten Frequenz betrifft, und eine zweite Aufgabe Zellsuchmessungen auf einer oder mehreren von der ersten Frequenz verschiedenen Frequenzen betrifft.

## Revendications

1. Procédé pour fournir des informations relatives à des priorités de tâches destinées à une programmation de tâches dans un système (100), le système (100) étant un terminal de communication mobile comportant une antenne (150), le procédé comprenant :
- l'obtention (210) d'un statut relatif au système (100), le statut relatif au système (100) étant une situation de bonne ou mauvaise réception de réseau par le terminal de communication mobile,
- la sélection (240), parmi une pluralité de tableaux de priorités de tâches (400), d'un certain tableau de priorités de tâches, dans lequel, dans le cas d'une bonne réception de réseau par l'intermédiaire de l'antenne (150), un premier tableau de priorités est sélectionné, dans le cas d'une mauvaise réception de réseau par l'intermédiaire de l'antenne (150), un deuxième tableau de priorités est sélectionné, le deuxième tableau de priorités comprend des priorités de tâches qui sont adaptées à la situation de mauvaise réception de réseau de sorte que des tâches qui sont d'une grande pertinence au cours d'une mauvaise réception de réseau pour maintenir la communication avec le réseau de communication opérationnelle soient exécutées avec plus de préférence, et les tableaux de priorités de tâches (400) sont aptes à comprendre, pour chaque tâche, une plage de priorités comprenant un ordre séquentiel ou non séquentiel de valeurs de priorité ; et
- la fourniture (230) du tableau de priorités de tâches sélectionné pour la programmation de tâches.

2. Procédé pour fournir des informations relatives à des priorités de tâches destinées à une programmation de tâches dans un système (100), le système (100) étant un téléphone mobile à carte de module d'identité d'abonné, SIM, double (100), le procédé comprenant :
- l'obtention (210) d'un statut relatif au système (100), dans lequel des changements de statut relatifs au système (100) sont liés à une détection de plusieurs cartes SIM à l'intérieur du téléphone mobile à carte SIM double,
- la sélection (240), parmi une pluralité de tableaux de priorités de tâches (400), d'un premier tableau de priorités de tâches, dans lequel, s'il est détecté qu'une deuxième carte SIM est insérée dans le téléphone mobile (100), un deuxième tableau de priorités de tâches est sélectionné au lieu du premier tableau de priorités de tâches, et les tableaux de priorités de tâches (400) sont aptes à comprendre, pour chaque tâche, une plage de priorités comprenant un ordre séquentiel ou non séquentiel de valeurs de priorités, dans lequel le deuxième tableau de priorités de tâches permet, dans le cas d'un conflit de ressources entre une première tâche relative à la première carte SIM et une deuxième tâche relative à la deuxième carte SIM, qu'un accès à la ressource soit assigné à la tâche relative à la carte SIM avec une valeur de priorité supérieure ; et
- la fourniture (230) du tableau de priorités de tâches sélectionné pour la programmation de tâches.

3. Procédé selon la revendication 1 ou 2, comprenant en outré :
- l'obtention d'une valeur de priorité initiale pour au moins l'une de la pluralité de tâches.

4. Procédé selon l'une quelconque des revendications précédentes, dans lequel le système (100) est un système de traitement de couche 1.

5. Procédé selon l'une quelconque des revendications précédentes, dans lequel une première tâche concerne une lecture d'informations de système de diffusion à une première fréquence et une deuxième tâche concerne des mesures de recherche de cellule à une ou plusieurs deuxièmes fréquences différentes de la première fréquence.

6. Produit de programme informatique comprenant des portions de code de programme pour effectuer les étapes de procédé selon l'une des revendications précédentes, lorsque le produit de programme informatique est exécuté sur un ou plusieurs composants d'un dispositif informatique.

7. Produit de programme informatique selon la revendication 6, mémorisé sur un support d'enregistrement lisible par ordinateur.

8. Dispositif électronique (100) apte à fournir des informations relatives à des priorités de tâches destinées à une programmation de tâches dans le dispositif électronique (100), le dispositif électronique (100) étant un terminal de communication mobile comprenant :
- une antenne (150),
- une première unité d'obtention (110) apte à obtenir un statut relatif au dispositif électronique (100), le statut relatif au dispositif électronique (100) étant une situation de bonne ou mauvaise réception de réseau par le terminal de communication mobile,
- une deuxième unité d'obtention (120) apte à sélectionner (240), parmi une pluralité de tableaux de priorités de tâches (400), un certain tableau de priorités de tâches, dans lequel
- dans le cas d'une bonne réception de réseau par l'intermédiaire de l'antenne (150), un premier tableau de priorités est sélectionné,
- dans le cas d'une mauvaise réception de réseau par l'intermédiaire de l'antenne (150), un deuxième tableau de priorités est sélectionné, le deuxième tableau de priorités comprend des priorités de tâches qui sont adaptées à la situation de mauvaise réception de réseau de sorte que des tâches qui sont d'une grande pertinence au cours d'une mauvaise réception de réseau pour maintenir la communication avec le réseau de communication opérationnelle soient exécutées avec plus de préférence,
- les tableaux de priorités de tâches (400) sont aptes à comprendre, pour chaque tâche, une plage de priorités comprenant un ordre séquentiel ou non séquentiel de valeurs de priorité, et
- le tableau de priorités de tâches sélectionné est fourni pour la programmation de tâches.

9. Dispositif électronique (100) apte à fournir des informations relatives à des priorités de tâches destinées à une programmation de tâches dans le dispositif électronique (100), le dispositif électronique (100) étant un téléphone mobile à carte de module d'identité d'abonné, SIM, double (100) comprenant :
- une première unité d'obtention (110) apte à obtenir un statut relatif au dispositif électronique (100), dans lequel des changements de statut relatifs au dispositif électronique (100) sont liés à une détection de plusieurs cartes SIM à l'intérieur du téléphone mobile à carte SIM double,
- une deuxième unité d'obtention (120) apte à sélectionner (240), parmi une pluralité de tableaux de priorités de tâches (400), un premier tableau de priorités de tâches, dans lequel
- s'il est détecté qu'une deuxième carte SIM est insérée dans le téléphone mobile (100), un deuxième tableau de priorités de tâches est sélectionné au lieu du premier tableau de priorités de tâches,
- les tableaux de priorités de tâches (400) sont aptes à comprendre, pour chaque tâche, une plage de priorités comprenant un ordre séquentiel ou non séquentiel de valeurs de priorités,
- le deuxième tableau de priorités de tâches est apte à permettre, dans le cas d'un conflit de ressources entre une première tâche relative à la première carte SIM et une deuxième tâche relative à la deuxième carte SIM, qu'un accès à la ressource soit assigné à la tâche relative à la carte SIM avec une valeur de priorité supérieure, et
- le tableau de priorités de tâches sélectionné est fourni pour la programmation de tâches.

10. Dispositif électronique (100) selon la revendication 8 ou 9, dans lequel la deuxième unité d'obtention (120) est apte à obtenir une valeur de priorité initiale pour au moins l'une de la pluralité de tâches.

11. Dispositif électronique (100) selon l'une quelconque des revendications 8 à 10, dans lequel le dispositif électronique (100) est apte à fournir un traitement de couche 1.

12. Dispositif électronique (100) selon l'une quelconque des revendications 8 à 11, dans lequel une première tâche concerne une lecture d'informations de système de diffusion à une première fréquence et une deuxième tâche concerne des mesures de recherche de cellule à une ou plusieurs deuxièmes fréquences différentes de la première fréquence.
